# EUROPEAN PATENT APPLICATION

(11) **EP 1 086 836 A1**
(43) Date of publication of application: **28.03.2001**
(21) Application number: 00203263.9
(22) Date of filing: 20.09.2000
(51) Int. Cl.: B60G 7/02, B60G 13/00, B60G 11/46, B62D 21/00

(54) **Bearing bracket for attaching an axle assembly to the chassis of a vehicle**

(30) Priority: 21.09.1999 NL 1013104
(71) Applicant: Weweler Nederland B.V., 7332 AP Apeldoorn (NL)
(72) Inventor: Aalderink, Derk Geert, 7245 NV Laren (NL)
(74) Representative: Iemenschot, Johannes Andreas, Ir.

(57) **Abstract**

A bearing bracket (3) for attaching an axle assembly to the chassis of a vehicle can be connected to a chassis beam of the vehicle. The bearing bracket is substantially U-shaped, having two side plates (11; 12) and a connecting plate (13) between the side plates. The side plates (11, 12) are at least provided with holes (14 and 15) for attaching a carrier arm and a shock absorber of the axle assembly. The bearing bracket (3) is bent out of a single piece of sheet-metal material and is free of welded joints or parts welded thereto.

## Description

The invention relates to a bearing bracket according to the preamble of claim 1.

Various embodiments of a bearing bracket of this type, also known as a spring carrier or spring bracket, are known. In certain embodiments, the side plates and the intermediate plate are joined together by welding. Furthermore, a connecting piece which is welded to the two side plates is often arranged inside the bracket, between the side plates, for reinforcement purposes. Also, in certain cases rings are welded to the side plates of the bearing bracket around the holes for attaching a carrier arm and/or a shock absorber, in order to increase the bearing surface for an attachment bolt which is to be fitted through the holes.

The known bearing brackets have the drawback of being time-consuming and therefore expensive to manufacture.

The object of the invention is to provide a bearing bracket which is less expensive while retaining its quality.

This object is achieved by a bearing bracket according to claim 1.

The bearing bracket according to the invention is less expensive than the known bearing brackets yet nevertheless fulfills all the demands imposed on it.

Preferred embodiments of the bearing bracket according to the invention are defined in the claims 2 to 5.

The invention also relates to a vehicle according to claim 6.

The invention will be explained in more detail in the following description of a bearing bracket according to the invention, with reference to the drawing, in which:
Figure 1 diagrammatically depicts a wheel axle suspension of an axle unit of a vehicle which has a bearing bracket according to the invention,
Figure 2 shows a perspective view of a first embodiment of a bearing bracket according to the invention,
Figures 3, 4 and 5 respectively show a side view, plan view and front view of the bearing bracket illustrated in Fig. 2, and
Figure 6 shows a perspective and exploded view of a connection between a slightly modified embodiment of a bearing bracket according to the invention and a strut arranged between two bearing brackets arranged on either side of the vehicle.

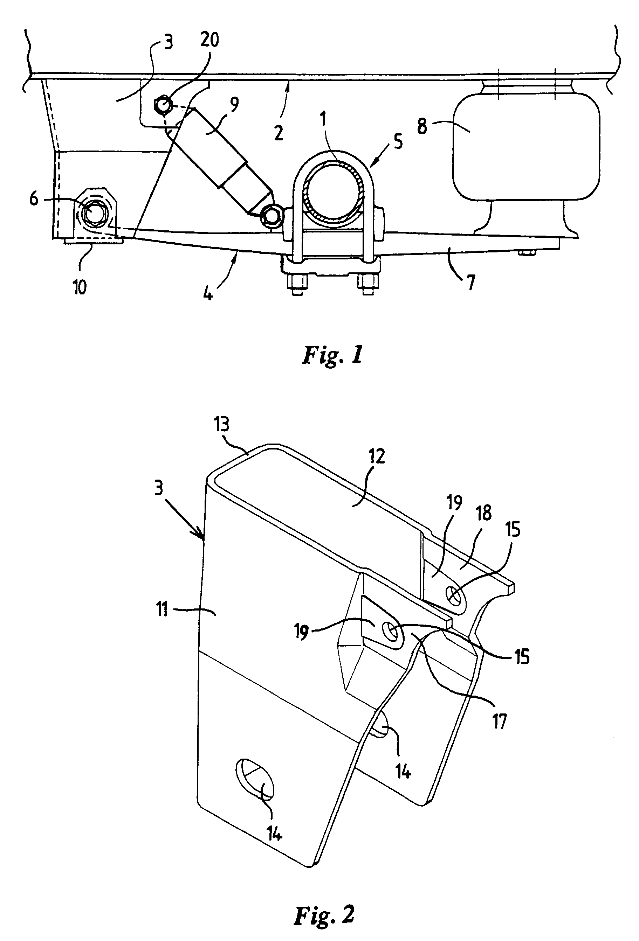

Fig. 1 diagrammatically depicts a wheel axle suspension of an axle unit of a vehicle. The wheel axle is denoted by the reference numeral 1. The wheel axle 1, which has one or more wheels on both its ends, is shown as a hollow, round axle. However, the wheel axle 1 may also be square or of some other cross section. Usually, the vehicle is provided with a wheel axle suspension on both sides.

The wheel axle suspension comprises a bearing bracket 3, which is attached to a chassis beam 2 of the vehicle, and a carrier arm 4, which is attached pivotably to the bearing bracket 3 and extends in the longitudinal direction of the vehicle, for the wheel axle 1. In a known way, the wheel axle is fixed to the carrier arm 4 by means of a U-shaped clamp 5.

The carrier arm 4 is attached to the bearing bracket 3 by means of an attachment bolt 6. In the embodiment illustrated, an end section 7 of the carrier arm 4 extends to beyond the wheel axle 1. A gas spring 8 is arranged between this end section 7 and the chassis 2. Furthermore, a shock absorber 9 is arranged between the carrier arm 4 and the bearing bracket 3.

The carrier arm 5 is attached to the bearing bracket 3 via a special attachment device 10, by means of which the position of the attachment bolt 6 of the carrier arm 5 in the longitudinal direction of the vehicle can be adjusted with respect to the bearing bracket 3. This attachment device 10 is described in Dutch Patent Application 1008615, in the name of the applicant, which is not a prior publication.

As shown in Figs. 2 to 5, the bearing bracket 3 is substantially U-shaped and comprises two side plates 11 and 12 and a connecting plate 13 arranged between them. The bearing bracket 3 is open at the rear, as seen in the direction of travel. This shape of the bearing bracket 3 is intended in particular for so-called centre mounting of the shock absorber 9, in which the shock absorber 9 is arranged above the carrier arm 4.

The bearing bracket 3 is bent out of a single piece of sheet-metal material and is free from welded joints or parts welded thereto. The bearing bracket 3 can thus be fabricated in a less expensive manner. The only welded joint will be that between the bearing bracket 3 and the chassis beam 2.

The side plates 11 and 12 are provided with holes 14 for the attachment of the carrier arm 4 and holes 15 for the attachment of the shock absorber 9.

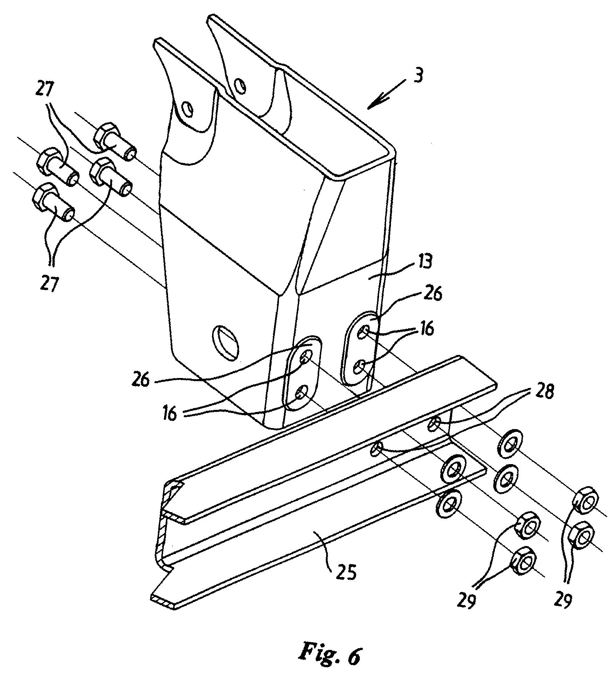

If appropriate, the connecting plate 13 is provided with holes 16 for the attachment of a strut which can be arranged between two bearing brackets arranged on either side of the vehicle. This is illustrated in Fig. 6.

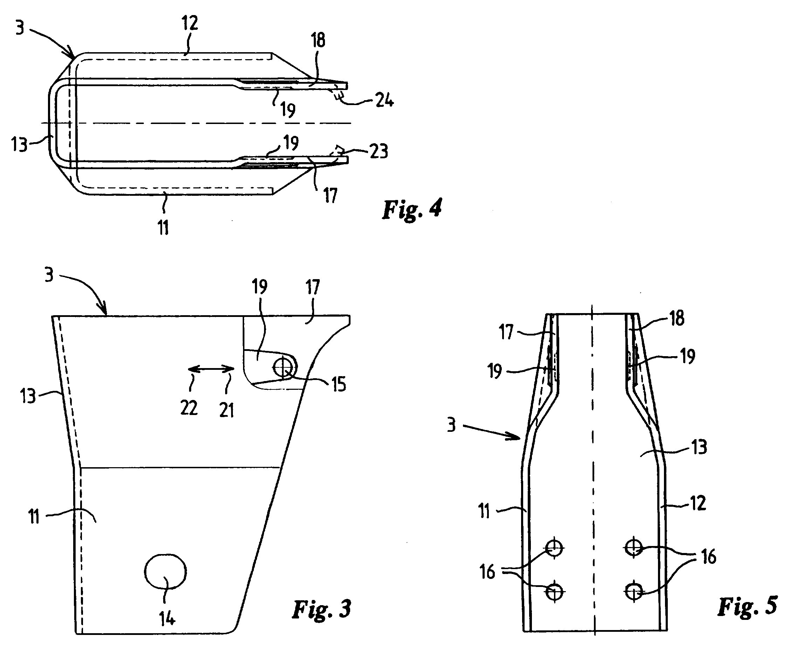

The side plates 11 and 12 are not planar. The bearing bracket 3 is narrower on the top side, which is to be attached to the chassis 2, than on the underside. Furthermore, the sections 17 and 18 of the side plates 11 and 12, where the shock absorber 9 is attached to the bearing bracket 3, are offset slightly inwards, as can be seen most clearly from Fig. 4. The attachment part of shock absorber 9, and in particular a steel inner sleeve in the attachment part, during fitting of the shock absorber, is clamped securely between the sections 17 and 18 by a bolt 20 which fits through the holes 15 (cf. Fig. 1).

To ensure that even in the event of fluctuating forces on the shock absorber 9 a good connection is maintained between the shock absorber 9 and the bearing bracket 3, at least one of the side plates 11, 12, at least around the hole 15 on the inside of the bearing bracket 3, may be provided with a shallow recessed section 19. In the embodiment illustrated, both side plates 11 and 12 are provided with a recessed section 19 of this nature. The depth of each recessed section 19 is approx. 0.5 - approx. 2.0 mm.

The dimensions of each recessed section 19 are preferably such that the attachment part of the shock absorber 9, in particular the steel inner sleeve in the attachment part, is held in a close-fitting manner in the recessed section 19 or the recessed sections 19. In this way, after the bolt 20 has been tightened, a form-fitting connection is produced between the shock absorber 9 and the bearing bracket 3, which connection is not affected, or is scarcely affected, by considerably fluctuating forces on the shock absorber 9. Since the steel inner sleeve is enclosed in the recessed section(s) 19, it is possible to absorb high shear forces in the longitudinal direction of the shock absorber 9, even with a minimal depth of the recessed section(s) 19.

If the side plates 11 and 12 of the bearing bracket 3 are provided with recessed section 19, it is necessary, during fitting and removal of the shock absorber 9, for the attachment part of the shock absorber to be introduced into and removed from the recessed sections 19 in the direction indicated by the arrows 21 and 22 in Fig. 3. It should be noted that the shape of the recessed sections 19 may differ from the shape illustrated in the drawing.

If appropriate, the lip-like ends 23 and 24 of the sections 17 and 18, respectively, of the bearing bracket 3 may be bent inwards, as indicated by dashed lines in Fig. 4. As a result, it is possible to produce an improved welded joint between the bearing bracket 3 and a chassis beam 2 at that location.

Fig. 6 shows a perspective and exploded view of a slightly modified bearing bracket 3 and a strut 25 (shown partly) arranged between two bearing brackets 3 arranged on either side of the vehicle. The connecting plate 13 is provided with holes 16. The region 26 around the holes 16 is slightly elevated with respect to the outer surface of the connecting plate 13 to ensure a firm connection between the bearing bracket 3 and the strut 25. This connection is provided by means of bolts 27 extending through the holes 16 in the bearing bracket 3 and corresponding holes 28 in the strut 25, and nuts 29.

## Claims

1. Bearing bracket (3) for attaching an axle assembly to the chassis of a vehicle, which bearing bracket (3) can be connected to a chassis beam (2) of the vehicle and is substantially U-shaped, having two side plates (11; 12) and a connecting plate (13) between the side plates, the side plates (11; 12) at least being provided with holes (14; 15) for attaching a carrier arm (4) and a shock absorber (9) of the axle assembly, characterized in that the bearing bracket (3) is bent out of a single piece of sheet-metal material and is free of welded joints or parts welded thereto.

2. Bearing bracket according to claim 1, in which the connecting plate (13) is provided with holes (16) for attachment of a strut (25) which can be arranged between two bearing brackets arranged on either side of the vehicle.

3. Bearing bracket according to claim 2, in which the region (26) around the holes (16) is elevated with respect to the outer surface of the connecting plate (13).

4. Bearing bracket according to claim 1, in which at least one of the side plates (11; 12) of the bearing bracket (3), at least around the holes (15) for attaching a shock absorber (9) to the inside of the bearing bracket (3), is provided with a shallow recessed section (19).

5. Bearing bracket according to claim 4, in which the dimensions of the recessed section (19) are such that the attachment part, which is to be attached to the bearing bracket (3), of the shock absorber (9), in particular a steel inner sleeve accommodated in the attachment part, can be held in a substantially close-fitting manner in the recessed section (19).

6. Vehicle comprising a chassis and at least one axle assembly attached to the chassis by means of two bearing brackets (3), one on either side of the vehicle, each bearing bracket (3) being a bearing bracket according to one or more of the claims 1 to 4.

7. Vehicle according to claim 6, in which a strut (25) is provided between the two bearing brackets (3), the strut (25) being connected to each of the bearing brackets by means of a bolt-and-nut connection.
